Europäisches Patentamt

(19) European Patent Office

Office européen des brevets

(11) Publication number: **0 151 096**
**B1**

(12) **EUROPEAN PATENT SPECIFICATION**

(45) Date of publication of patent specification: **26.04.89**

(21) Application number: **85850012.7**

(22) Date of filing: **09.01.85**

(51) Int. Cl.⁴: **F 16 L 19/02**

(54) **A device for connecting a pipe to a connector element and a method of manufacturing said device.**

(30) Priority: **12.01.84 SE 8400135**

(43) Date of publication of application:
**07.08.85 Bulletin 85/32**

(45) Publication of the grant of the patent:
**26.04.89 Bulletin 89/17**

(84) Designated Contracting States:
**AT BE CH DE FR GB IT LI NL**

(56) References cited:
**DE-A-2 749 391**

(73) Proprietor: **Ezze AB**
**Box 501**
**S-335 00 Gnosjö (SE)**

(72) Inventor: **Stigson, Rolf**
**Nydalagatan 3**
**S-330 33 Gnosjö (SE)**

(74) Representative: **Linde, Leif**
**Vernamo Patentbyra AB P.O. Box 1**
**S-270 11 Abbekas (SE)**

Courier Press, Leamington Spa, England.

EP 0 151 096 B1

## Description

The present invention relates to a device for connecting a pipe, preferably a copper pipe, with a coupling element and a method of providing a device of this kind.

A previously known device for connecting a copper pipe with a coupling element comprises a coupling nut which can be screwed on to the coupling element and a clamping ring which is releasably positioned within the nut and is adapted to be fixedly clamped against the pipe by being deformed radially inwards when the nut is tightened. A device of this type is described for example in DE-A-2 749 391.

A drawback of the previously known device is that it consists of several parts, the clamping ring being a small part which can easily disappear. Another drawback is that the friction between nut and clamping ring on one side and between clamping ring and pipe on the other side may cause a rotation of the pipe when the nut is tightened.

The object of the present invention is to provide a device for connecting a pipe with a coupling element, in which the above drawbacks have been obviated.

In order to comply with this object the device according to the invention is characterized in that the clamping ring is fastened in the coupling nut by means of a mass which has lubricant properties and has a melting point which is higher than room temperature, for example consistent grease or vaseline.

Thus, in a device according to the invention the clamping ring is connected with the coupling nut when the device is manufactured, so that the number of loose parts is reduced and the risk of loosing the clamping ring is obviated, while the friction between the clamping ring and the nut is at the same time reduced so that rotation of the pipe when connecting the pipe with a coupling element by means of a device according to the invention is obviated.

In a preferred embodiment of a device according to the invention the surfaces of engagement between nut and clamping ring are designed so as to promote a further reduction of the friction between the nut and the clamping ring already reduced by means of the mass having lubricant properties. Thereby, the surfaces of engagement suitably have the form of a conical surface on the nut and a rounded surface having non-uniform radius on the clamping ring.

The invention also relates to a method of manufacturing a device for connecting a pipe with a coupling element, the device being of the kind stated above, the method being characterized in that the clamping ring is connected in the coupling nut by means of a mass having lubricant properties and higher melting point than room temperature, for example consistent grease or vaseline.

When the method according to the invention is conducted the mass is suitably injected into the coupling nut in a molten state, whereupon the clamping ring is positioned in the mass in the nut before the mass has solidified, and is releasably retained in the mass when the mass has been cooled and taken a non-liquid state.

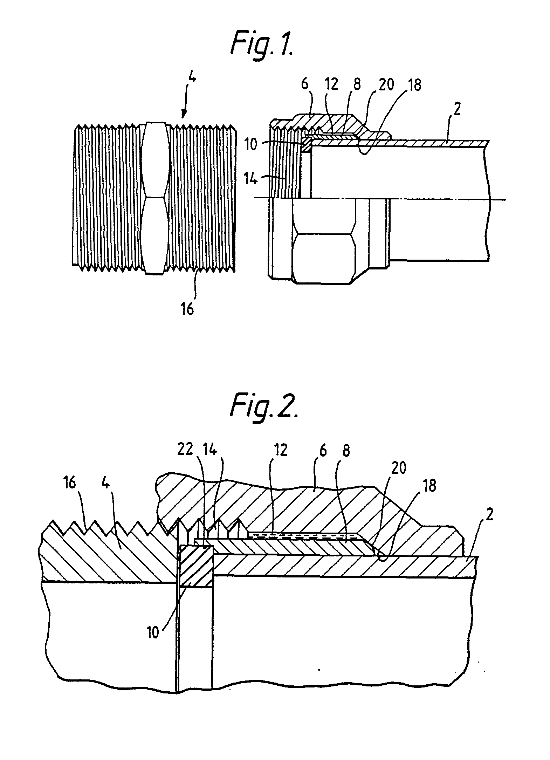

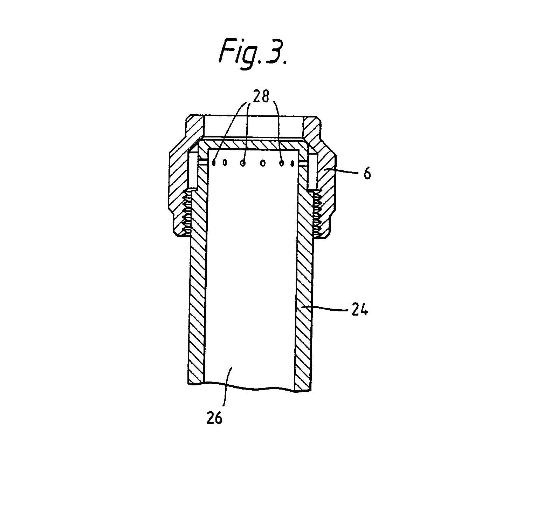

An embodiment of the invention is described in the following with reference to the accompanying drawings. Fig 1 shows an embodiment of a connecting device according to the invention, partially in axial section. Fig 2 is a detail of Fig 1 in an enlarged scale. Fig 3 schematically shows a device for conducting the method according to the invention.

The connecting device shown in Figs. 1 and 2 is intended for connecting a pipe 2, preferably consisting of copper, to a coupling or pipe element 4. The connecting device comprises a coupling nut 6, a clamping ring 8 and a packing 10 which preferably is the fibre type.

In accordance with the invention the clamping ring is releasably fastened inside the nut by means of a mass 12 positioned between the inner surface of the nut 6 and the outer surface of the clamping ring 8. The mass 12 has lubricant properties and has higher melting point than room temperature. Preferably the mass 12 consists of consistent grease or vaseline. The mass 12 is applied in the nut 6 together with the clamping ring already when the connecting device is manufactured and releasably retains the clamping ring in the nut while the connecting device is stored and handled.

The coupling nut 6 has an inner thread 14 which is adapted to cooperate with an outer thread 16 of the coupling element 4. The coupling nut 6 has a substantially conical engagement surface 18. The clamping ring 8 has an engagement surface 20 which is adapted to cooperate with the engagement surface 18 of the nut 6. The engagement surface 20 is designed so that it is rounded having a radius which is reduced in the direction of the end of the clamping ring 8. At the opposite end from the engagement surface 20 the clamping ring 8 has a depression 22 in which the packing 10 is retained.

When the pipe 2 is connected with the coupling element 4 the nut is screwed on to the coupling element 4, the clamping ring being axially clamped between the conical engagement surface 18 of the nut and the packing 10 which in turn engages the coupling element 4. When the tightening of the nut 6 is continued the end portion provided with the engagement surface 20 is forced into the pipe wall by the clamping ring in order to be fixed to the pipe. However, because of the special design of the engagement surface 20 of the clamping ring 8 the clamping ring is fixedly clamped between the engagement surface 18 of the nut and the coupling element 4 through the packing 10 before the clamping ring is deformed in the way described above. Thereby, a rotation of the pipe is obviated because of the fact that the tendency of the pipe to accompany the rotation of the nut is reduced. The mass having lubricant properties positioned between the outer surface of the clamping ring 8 and the inner surface of the nut acts for reducing the tendency of rotation of the pipe because of the fact that the friction between the clamping ring and the nut is reduced.

When a connecting device according to the invention is manufactured the coupling nut 6 is positioned on a nozzle 24 as shown in fig. 3. The nozzle 24 is provided with a supply channel 26 for grease and has radially directed spray openings 28. The grease which is injected into the nut through the nozzle 24 is heated to a liquid state but has such a melting point that it is non-liquid at room temperature. For example the grease can be of vaseline type and have a melting point of 50°C.

After the grease has been injected into the nut and the nozzle has been removed a clamping ring 8 is positioned in the nut while the grease is still in a liquid state. After the grease has been cooled and thereby taken a non liquid state the clamping ring is retained in the nut in such a way that it is maintained in the nut while the nut is handled and stored. When the connecting device according to the invention is used the grease has the effect described above in connection with the mounting of the connecting device.

## Claims

1. A device for connecting a pipe (2) with a coupling element (4), comprising a coupling nut (6) which can be screwed on to the coupling element and a clamping ring (8) which is releasably positioned in the nut and is adapted to be fixedly clamped around the pipe when the nut is tightened, characterized in that the clamping ring (8) is positioned in the coupling nut (6) by means of a mass (12) having lubricant properties and having a higher melting point than room temperature, for example consistent grease or vaseline.

2. A device as claimed in claim 1, characterized in that the engagement surfaces (18, 20) between the nut (6) and the clamping ring (8) are formed so as to provide for a further reduction of the friction between the nut and the clamping ring already reduced by means of the mass (12) having lubricant properties.

3. A device as claimed in claim 2, characterized in that the engagement surfaces are constituted by a conical surface (18) on the nut (6) and a rounded surface (20) on the clamping ring (8), the rounded surface having a non-uniform radius, preferably a radius reduced in the direction of the end portion of the clamping ring.

4. A method for providing a device for connecting a pipe to a coupling element according to claim 1, said device comprising a coupling nut which can be screwed on to the coupling element and a clamping ring which is adapted to be fixedly clamped around the pipe when the nut is tightened, wherein the clamping ring is releasably positioned in the coupling nut before the coupling nut is screwed on to the coupling element, characterized in that the clamping ring is fastened in the coupling nut by means of a mass having lubricant properties and having higher melting point than room temperature, for example consistent grease or vaseline

5. A method as claimed in claim 4, characterized in that the mass is injected into the coupling but in molten state whereupon the clamping ring is positioned in the mass in the nut before the mass has solidified and is releasably retained in the mass, when the mass has cooled and taken a non-liquid state.

## Patentansprüche

1. Einrichtung zur Verbindung eines Rohres (2) mit einem Kopplungsglied (4), mit einer Spannmutter (6), welche auf das Kopplungsglied aufgeschraubt werden kann, und einem Klemmring (8), welcher lösbar in der Mutter angeordnet und so ausgelegt ist, daß er um das Rohr herum festgeklemmt werden kann, wenn die Mutter festgezogen wird, dadurch gekennzeichnet, daß der Klemmring (8) in der Spannmutter (6) mit Hilfe einer Masse (12) angeordnet wird, welche Schmiermitteleigenschaften und einen Schmelzpunkt hat, der höher ist als Zimmertemperatur, z. B. konsistentes Gleitlagerfett oder Vaseline.

2. Einrichtung nach Anspruch 1, dadurch gekennzeichnet, daß die Eingriffsflächen (18, 20) zwischen der Mutter (6) und dem Klemmring (8) so geformt sind, daß sie eine weitere Verringerung der Reibung zwischen der Mutter und dem Klemmring vorsehen, die schon mit Hilfe der Masse (12) mit Schmiermitteleigenschaften reduziert ist.

3. Einrichtung nach Anspruch 2, dadurch gekennzeichnet, daß die Eingriffsflächen von einer konischen Oberfläche (18) an der Mutter (6) und einer abgerundeten Oberfläche (20) an dem Klemmring (8) gebildet werden, wobei die abgerundete Oberfläche einen nicht gleichmäßigen Radius hat, vorzugsweise einen Radius, welcher in Richtung des Endabschnittes des Klemmringes abnimmt.

4. Verfahren zum Vorsehen einer Einrichtung zum Verbinden eines Rohres mit einem Kopplungsglied gemäß Anspruch 1, wobei die Einrichtung eine Spannmutter, die auf das Kopplungsglied aufgeschraubt werden kann, sowie einen Klemmring aufweist, welcher so ausgelegt ist, daß er fest um das Rohr herum verklemmt werden kann, wenn die Mutter festgezogen wird, wobei der Klemmring lösbar in der Spannmutter angeordnet ist, bevor diese auf das Kopplungsglied aufgeschraubt wird, dadurch gekennzeichnet, daß der Klemmring in der Spannmutter mit Hilfe einer Masse befestigt wird, die Schmiermitteleigenschaften und einen Schmelzpunkt hat, der höher ist als Zimmertemperatur, z. B. mit konsistentem Gleitlagerfett oder Vaseline.

5. Verfahren nach Anspruch 4, dadurch gekennzeichnet, daß die Masse in geschmolzenem Zustand in die Spannmutter eingespritzt wird, woraufhin der Klemmring in der Masse in der Mutter angeordnet wird, bevor die Masse sich verfestigt hat und lösbar in der Masse gehalten wird, wenn diese abgekühlt ist und einen nichtflüssigen Zustand angenommen hat.

**Revendications**

1. Dispositif permettant de raccorder un tuyau (2) à un élément (4) d'accouplement, comprenant un écrou (6) d'accouplement que l'on peut visser sur l'élément (4) d'accouplement, et une bague (8) de blocage qui est placée de manière amovible dans l'écrou et est prévue pour être fixée autour du tuyau lorsque l'écrou est serré, caractérisé en ce que la bague (8) de blocage est positionnée dans l'écrou (6) d'accouplement par une masse de matière (12) qui présente des propriétés de lubrification et un point de fusion supérieur à la température ambiante, par exemple de la graisse consistante ou de la vaseline.

2. Dispositif suivant la revendication 1, caractérisé en ce que les surfaces (18, 20) de contact entre l'écrou (6) et la bague (8) de blocage sont conçues de manière à favoriser une diminution encore plus grande du frottement entre l'écrou et la bague de blocage, frottement qui est déjà réduit par la masse de matière (12) présentant des propriétés de lubrification.

3. Dispositif suivant la revendication 2, caractérisé en ce que les surfaces de contact sont constituées d'une surface conique (18) sur l'écrou (6) et d'une surface arrondie (20) sur la bague (8) de blocage, cette surface arrondie ayant un rayon non uniforme, de préférence un rayon qui se réduit en allant vers l'extrémité de la bague de blocage.

4. Procédé pour fabriquer un dispositif permettant de raccorder un tuyau (2) à un élément (4) d'accouplement suivant la revendication 1, ce dispositif comprenant un écrou (6) d'accouplement que l'on peut visser sur l'élément (4) d'accouplement, et une bague (8) de blocage qui est prévue pour être fixée autour du tuyau (2) lorsque l'écrou (6) est serré, dans lequel la bague (8) de blocage est positionnée de manière amovible dans l'écrou (6) d'accouplement avant que ce dernier soit vissé sur l'élément (4) d'accouplement, caractérisé en ce que la bague (8) de blocage est maintenue dans l'écrou (6) d'accouplement par une masse de matière (12) qui présente des propriétés de lubrification et un point de fusion supérieur à la température ambiante, par exemple de la graisse consistante ou de la vaseline.

5. Procédé suivant la revendication 4, caractérisé en ce que la masse de matière (12) est injectée dans l'accouplement seulement à l'état fondu, après quoi la bague (8) de blocage est positionnée dans la masse de matière à l'intérieur de l'écrou (6) avant que cette masse se soit solidifiée, et elle sera maintenue de manière amovible dans la masse lorsque celle-ci se sera refroidie et aura pris une forme non liquide.

## Fig.1.

## Fig.2.

# Fig.3.